# EUROPEAN PATENT SPECIFICATION

(11) **EP 2 781 175 B1**
(45) Date of publication and mention of the grant of the patent: **07.10.2015**
(21) Application number: 14172556.4
(22) Date of filing: 11.11.2011
(51) Int. Cl.: A47J 31/06

(54) **A refillable device**
Ein nachfüllbares Gerät
Un dispositif rechargeable

(30) Priority: 18.11.2010 GB 201019587
(43) Date of publication of application: 24.09.2014
(62) Divisional of application: 11785067.7
(73) Proprietor: Kraft Foods R & D, Inc., Deerfield, IL 60015 (US)
(72) Inventor: Hansen, Nick Andrew, Banbury Oxfordshire OX16 1AH (GB); Norton, Mark, Banbury Oxfordshire OX16 0ND (GB)
(74) Representative: Boult Wade Tennant

(56) References cited:
- WO-A1-2005/099534
- US-A1- 2003 005 826
- US-A1- 2005 034 605

## Description

The present application relates to apparatus and methods relating to dispensation from beverage machines. In particular, it relates to devices, combinations of devices and beverage machines, and methods allowing for dispensation of heated water and other beverages from beverage machines.

### Background

Machines for dispensing beverages are well known. For example, coffee filter machines have been available for many years which combine hot water with ground coffee beans to produce a coffee extract that is then passed through a paper filter into a carafe. US3987717 describes one such machine. In more recent times 'on-demand' beverage machines have been marketed which allow for beverages to be produced on an individual basis as required by a user. Examples of such machines include those marketed under the brand names NESPRESSO^{®} by Nestle S.A. and SENSEO^{®} by Sara Lee Corporation which allow individual servings of coffee to be produced from individual sealed capsules or flexible bags of ground coffee.

Still more recently, beverage machines allowing for convenient, on demand dispensation of a range of beverage types have been produced. One example of such a system is marketed under the brand name TASSIMO^{®} by Kraft Foods, Inc. This system (as described in EP1440639) utilises a beverage machine that comprises a barcode reader and a range of beverage cartridges wherein each beverage cartridge contains one or more beverage ingredients and is coded with a barcode. In use, the code reader of the beverage machine scans and reads the barcode on a beverage cartridge after it is inserted into the machine and uses information decoded from the barcode to set one or more dispensation parameters of the beverage machine for that dispensation cycle. For each beverage cartridge the manufacturer determines the dispensation parameters and applies the relevant barcode at the point of manufacture. In addition, each beverage cartridge can only be used once.

US 2003/0005826 discloses a beverage brewing device for facilitating fluidization and flavour extraction in beverage brewing devices.

WO 2005/099534 discloses an infusion container for use with a brewer that is liquid permeable.

US 2005/0034605 discloses a clamshell coffee or other beverage packet brewer in which a packet or scoop of grounds can locate.

### Brief Summary of the Disclosure

There is disclosed a refillable device, suitable for use with a beverage machine, the device comprising:
an inlet for receiving, in use, water from a water supply of the beverage machine;
an outlet through which fluid can be dispensed; and
a plurality of refillable beverage ingredient chambers.

Advantageously, the refillable device allows a user to mix beverage ingredients in different recipes of their choice. It also allows them to reuse the device.

A plurality of fluid flow paths may extend from the inlet to the outlet and the plurality of refillable beverage ingredient chambers may be located such that a fluid flow path passes through each of the refillable beverage ingredient chambers.

The inlet is located at or near a periphery of the device, the outlet is located at or near a centre of the device and the plurality of refillable beverage ingredient chambers are distributed circumferentially around the outlet.

The upstream and downstream ends of each of the plurality of refillable beverage ingredient chambers may be defined by a barrier with one or more apertures therein.

The refillable device may comprise a first part and a second part that can be separated from one another to allow filling of beverage ingredients into the plurality of refillable beverage ingredient chambers and subsequently coupled together.

The plurality of refillable beverage ingredient chambers may comprise a main beverage ingredient chamber and a plurality of ancillary beverage ingredient chambers.

The or each of the parts of the device may by formed from a plurality of pieces that are assembled together. Preferably the pieces are formed from mouldings of polypropylene. Other engineering plastics may also be used.

There is also disclosed a combination of a refillable device as described above and one or more portions of beverage ingredients.

Examples of beverage ingredients which may be inserted into the device include coffee, coffee extracts, chocolate, cocoa extracts, milk, other dairy-based ingredients including creamers, tea, tea extracts, fruit-flavoured drink mixes, flavourings, colourings, sweeteners, foaming agents, etc.

For a particular beverage none, one or more of the ancillary beverage ingredient chambers may receive ingredients. The main and ancillary chambers may receive two or more ingredients as a mixture or composition.

The beverage ingredients in the chambers may be in a dry form such as a roasted and ground ingredient or a soluble powder or an agglomeration. The dry ingredients may be loosely packed into the chambers or may be in the form of compressed tablets.

The beverage ingredients in the chambers may be in a liquid form such as a liquid dairy-based ingredient or a liquid tea or coffee extract.

The one or more portions of beverage ingredients may be individually contained in a bag, wrapper, capsule, film or similar. The bag, wrapper, capsule, film or similar may be water soluble.

There is also disclosed a combination of a refillable device as described above and a beverage machine.

The outlet of the device may define a discharge outlet of the beverage machine. Advantageously using a discharge outlet of the device as the ultimate discharge point or outlet of the dispense path from the beverage machine prevents contamination of the beverage by any beverage ingredient residue which may be present in the parts of the beverage machine. Cross-contamination can be a problem, in particular where the beverage machine is used for dispensing beverages formed from an extractable or soluble beverage ingredient, such as roast and ground coffee, powdered chocolate or a liquid dairy-based ingredient. Using the device outlet as the beverage machine outlet allows that the beverage once it is formed, passes to an end receptacle without further contact with components of the beverage machine.

The device may be interchangeable with a cartridge piercing unit and/or a discharge spout of the beverage machine. Where the beverage machine to be used in combination with the device is normally provided with a piercing unit and/or a discharge spout for piercing cartridges containing beverage ingredients, the device may interchange with the piercing unit and/or the discharge spout. For example, beverage machines marketed under the brand name Tassimo^{®} (an example of which is described in EP1440639) comprise an inlet piercer and an outlet piercer. The outlet piercer of the Tassimo^{®} beverage machine may also define a discharge spout of the beverage machine or connect to a separate discharge spout. The inlet and outlet piercers may be formed as a single unit. The present device may be designed to be interchanged with the inlet piercer, the outlet piercer and/or the discharge spout of a Tassimo^{®} beverage machine. In this way, advantageously, the possibility of cross-contamination of the beverage is further reduced. The device may also be designed to fit beverage machines other than Tassimo^{®} beverage machines.

The device may be an insert that is partly or wholly received in use within the interior of the beverage machine. For example, the device may be inserted into the brew chamber of the beverage machine. Advantageously, the outlet of the device may extend outside the beverage machine to function as the ultimate outlet for the beverage.

The device may be an attachment that is attached to the beverage machine with the whole or a major portion of the device residing outside the beverage machine.

There is also disclosed a method of dispensing a beverage from a beverage machine, comprising utilising a refillable device comprising an inlet for receiving, in use, water from a water supply of the beverage machine; an outlet through which fluid can be dispensed; and a plurality of refillable beverage ingredient chambers, wherein the inlet is located at or near a periphery of the device, the outlet is located at or near a centre of the device and the plurality of refillable beverage ingredient chambers are distributed circumferentially around the outlet; the method comprising the steps of:
a) opening the device;
b) filling one or more of the plurality of refillable beverage ingredients with one or more beverage ingredient portions;
c) closing the device;
d) inserting the device in the beverage machine;
e) operating the beverage machine to thereby dispense water via the plurality of refillable beverage ingredient chambers and out of the outlet of the device into a receptacle.

### Description of the Drawings

Figure 1 is a cross-sectional view of a device according to the present disclosure;
Figure 2 is a perspective view of the device of Figure 1;
Figure 3 is a perspective exploded view of the device of Figure 1;
Figure 4 is a perspective view of the device of Figure 2 from another angle;
Figure 5 is a perspective exploded view of the device of Figure 1 from another angle;
Figure 6 is a schematic view of a combination according to the present disclosure comprising the device of Figure 1 and a beverage machine;
Figure 7 is a perspective exploded view of another device according to the present disclosure;
Figure 8 is a perspective view of the device of Figure 7;
Figure 9 is a cross-sectional view of the device of Figure 7; and
Figure 10 is a perspective view of a portion of the device of Figure 7 containing a plurality of ingredients.

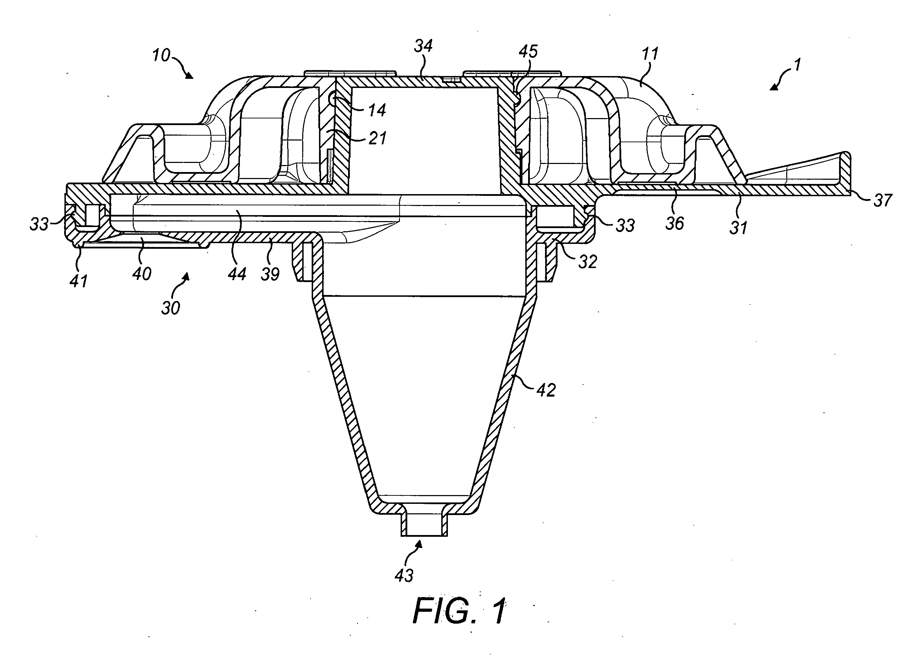

A first device 1 according to the present disclosure is shown in Figures 1 to 5 and comprises an upper part 10 and a lower part 30.

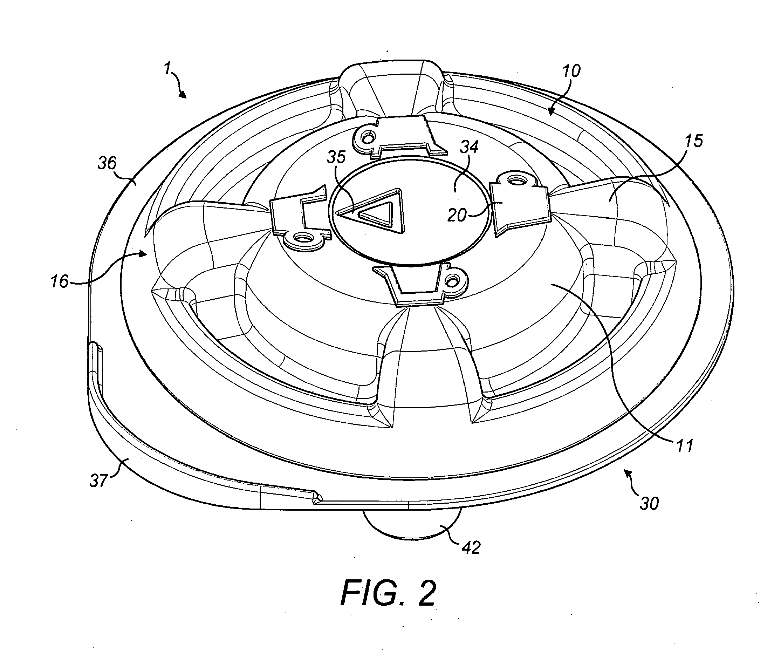

The upper part 10 comprises an annular shell 11 having a centrally located inner cylindrical extension 21 surrounding a central through aperture 12. The shell 11 is relatively thin and forms a generally cup-shaped or dome-shaped annular shape. The shell 11 is convoluted so as to comprise a plurality of depressions and raised finger grips 15 around the circumference of the shell 11 which allow a user of the device 1 to more easily grip the upper part 10. As shown most clearly in Figure 2, an upper face 16 of the upper part 10 is provided with four indicia 20 equi-spaced circumferentially around the central aperture 12. Each of the indicia 20 pictorially represents a volume setting of the device 1 - respectively, a quarter-full container; a half full container; a three-quarter full container; and a full container. The indicia 20 are evenly distributed around the circumference of the upper part so as to lie 90° offset from one another.

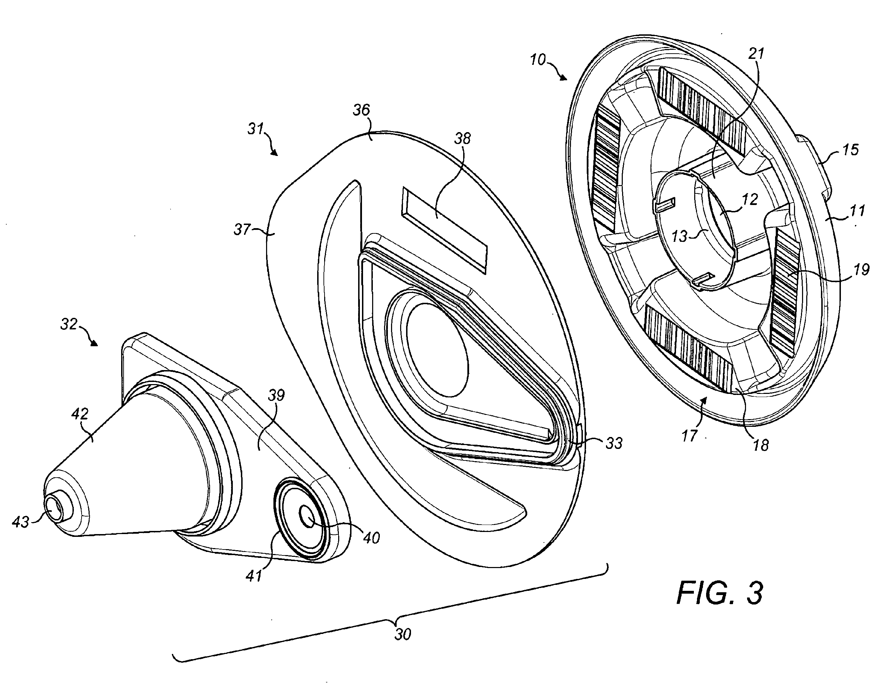

As most clearly shown in Figure 3, a lower face 17 of the upper part 10 also has a convoluted shape and in particular is provided with four lands 18 on which are deployed four barcodes 19. As with the indicia 20, the barcodes 19 are evenly distributed circumferentially around the upper part 10 so as to be 90° offset from one another.

The barcodes 19 are encoded with data representative of one or more dispensation parameters, such as volume, temperature or flow rate. For the illustrated device 1, the barcodes 19 are encoded with dispensation volumes of 150ml, 200ml, 400ml and 600ml respectively. The barcodes 19 may use a proprietary encoding symbology or a standardised symbology such as Universal Product Code (UPC) or European Article Number-13 (EAN-13).

As shown in Figures 1, 3 and 5, the inner cylindrical extension 21 is provided with a circumferential race 13 near the upper side of the upper part 10 in the form of a channel of semi-circular cross-section which extends around the entire circumference of the inner cylindrical extension 21. In addition, the race 13 is provided with four pip recesses 14 evenly distributed around the race 13 offset by 90° from one another. The use of the pip recesses 14 and race 13 will be described further below.

The upper part 10 may be formed as a moulded component or otherwise thermoformed from polypropylene. Other engineering plastics may also be used.

The lower part 30, as shown in Figure 3, comprises a base member 31 and an inlet/outlet member 32 which are assembled together by means of co-operating snap-fit formations 33.

The base member 31 comprises a generally planar plate 36 which is generally circular in shape except for a single lobe portion 37 which extends at one point around the circumference of the plate 36. A rectangular window 38 is provided in the plate 36, the function of which will be described below.

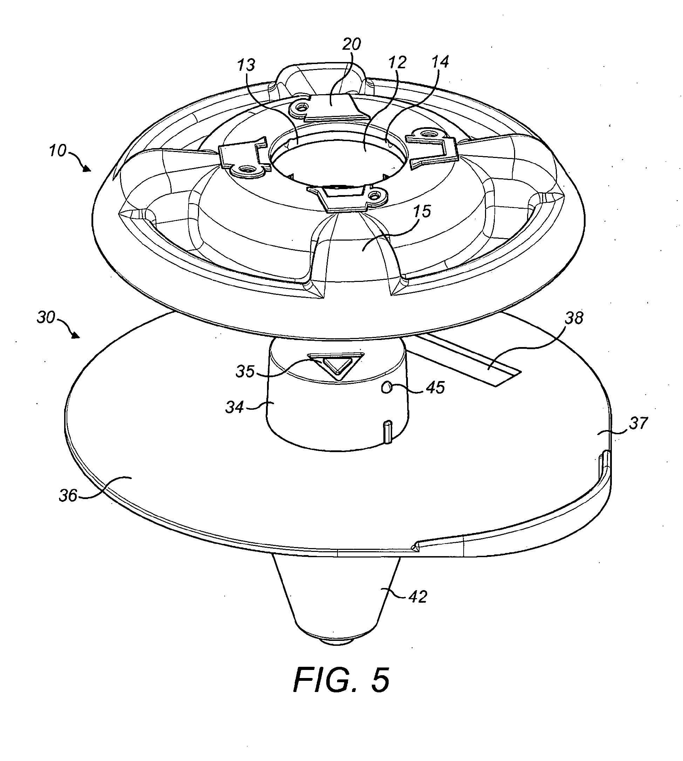

As shown in Figures 1 and 5, the base member 31 also comprises an upwardly extending central boss 34 of generally cylindrical shape. A pip 45 is provided on the central boss 34 near the upper face thereof. The upper face of the central boss 34 is provided with an arrow indicia 35, the use of which will be described below.

The inlet/outlet member 32 comprises a body portion 39 having an inlet aperture 40 and a discharge spout 42 extending therefrom. The discharge spout 42 may be formed unitarily with the body portion 39 or may be a separate component that is assembled with the body portion 39 by means of snap-fit formations.

The inlet aperture 40 is formed as a hole in the body portion 39 and is provided with an annular peripheral ring formation 41 which stands proud of the remainder of the surface of the body portion 39 as shown most clearly in Figure 1.

The discharge spout 42 is generally frustoconical in shape and terminates at its lower end in an outlet aperture 43.

One or more seal members such as rubberised or polymer O-ring gaskets may be provided around the inlet aperture 40.

The upper part 10 and lower part 30 may be formed from moulded pieces of polypropylene. Other engineering plastics may also be used.

The device 1 is assembled by snap-fitting the inlet/outlet member 32 to the base member 31 to form the lower part 30. As best seen in Figure 1, the inlet/outlet member 32 and base member 31 define therebetween a flow passage 44 in the form of a conduit which extends through the interior of the device 1 from the inlet aperture 40 to the outlet aperture 43.

The upper part 10 is then assembled with the lower part 30 by inserting the inner cylindrical extension 21 over the central boss 34. As shown in Figure 1, the relative dimensions of the central boss 34 and the inner cylindrical extension 21 result in a close fit of the lower parts 30 and the upper part 10 whilst allowing relative rotational movement between the two components. Further, as shown in Figure 1, the pip 45 of the central boss 34 is received in race 13 of the upper part 10. The dimensions of the pip 45 are such as to form a matching fit with the pip recesses 14 of the race 13. The upper part 10 is retained on the lower part 30 by the interaction of the pip 45 and the race 13. Alternatively, other mutually engaging formations on the upper part 10 and the lower part 30 may be used to secure the two components together.

In use, a user of the device 1 may rotate the upper part 10 relative to the lower part 30 by holding the base member 31 and gripping the upper part 10 by the finger grips 15. Rotational force applied to the upper part 10 will result in the upper part 10 rotating relative to the lower part 30 with the pip 45 of the central boss 34 moving within race 13 of the upper part 10. As the pip 45 is moved into alignment with each pip recess 14, the upper part 10 will 'notch' relative to the lower part 30 such as to have a tendency to wish to remain in said alignment. A slightly increased rotational force must then be applied to move the pip 45 out of the engaged pip recess 14 into which it is received and further round the race 13. By this arrangement a user is provided with tactile feedback as to when the pip 45 is correctly aligned with one of the four pip recesses 14.

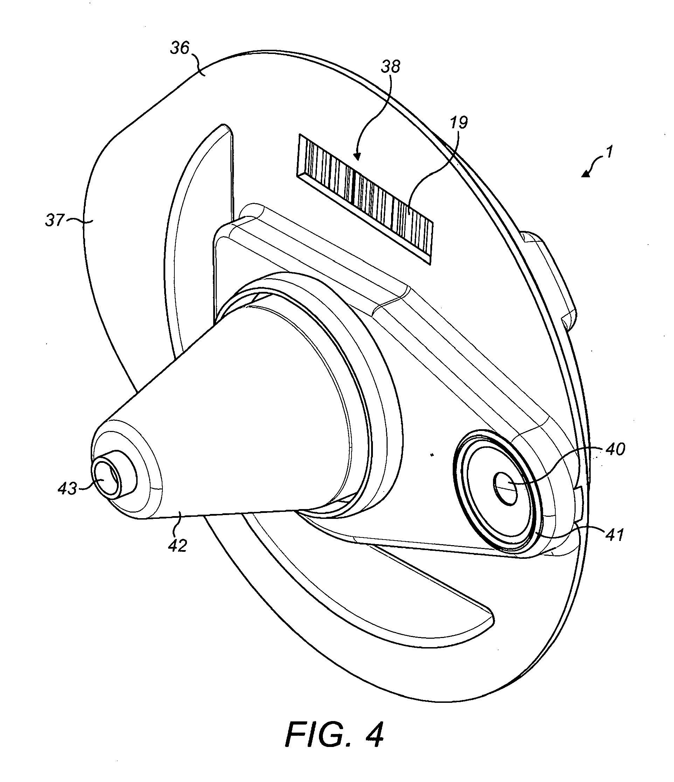

As shown in Figure 4, the relative positioning of the pip 45 on the central boss 34 and the pip recesses 14 in the race 13 is such that when the pip 45 is received in one of the pip recesses 14, one of the four barcodes 19 of the upper part 10 is aligned with the window 38 of the base member 31 so as to be visible therethrough.

The device 1 is designed to be used in combination with a beverage machine for dispensing heated water. The design of the device 1 illustrated in Figures 1 to 5 is designed to be combined with one of a range of beverage machines of the system marketed under the brand name Tassimo® and described by way of example in EP1440639, the contents of which are incorporated herein in their entirety. Such a beverage machine comprises a water reservoir that is fluidly connected to a water inlet of a brew head which comprises a fixed lower part and a pivotable upper part that can be opened to allow insertion of a beverage cartridge. The brew head comprises an outlet in the lower part through which beverages are dispensed. The brew head is shaped to receive the beverage cartridge in a specific orientation.

The water is heated either by providing an immersion heater in the reservoir or pumping the water via a resistive flow heater or thermoblock. One or more temperature sensors are provided for controlling the temperature of the water dispensed. Volume control is provided by use of a flow meter or by controlling the number of pump cycles of a positive displacement pump. The beverage machine comprises a microprocessor control linked to the heater, pump, flow meter, temperature sensor(s) and also to a barcode reader of the brew head. The brew head is provided with an inlet piercer coupled to the water inlet and an outlet piercer coupled to the outlet of the brew head. In use the piercers form an inlet and an outlet in previously sealed beverage cartridges inserted into the brew head. Preferably, the inlet and outlet piercers are formed as a single replaceable piercer unit.

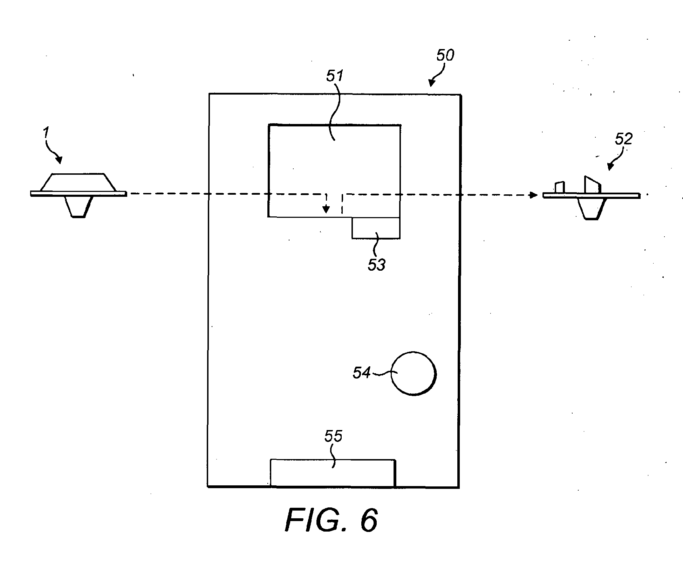

In order to use the device 1 in said beverage machine 50, as shown in Figure 6, the user first removes the replaceable inlet/outlet piercer unit 52 of the beverage machine 50 to expose the water inlet of the lower part of the brew head 51 and the brew head outlet. The user then configures the device 1 in order to set the desired volume of heated water to be dispensed by rotating the upper part 10 relative to the lower part 30 as described above. By so doing, the barcode 19 corresponding to the desired dispensation volume of heated water is brought into alignment with the window 38. At the same time, as shown most clearly in Figure 2, the arrow indicia 35 on the central boss 34 is brought into alignment with the indicia 20 on the upper part 10 corresponding with the chosen volume of heated water providing a visual check to the user of the volume set.

The device 1 is then inserted into the brew head 51 of the beverage machine as shown in Figure 6 such that the inlet aperture 40 of the inlet/outlet member 32 is aligned with the water inlet of the brew head and the discharge spout 42 extends downwardly through the outlet aperture of the brew head. In addition, the window 38 of the lower part 30 is aligned with the barcode scanner 53 of the brew head. Correct alignment of the device 1 is ensured by orientating the lobe 37 of the lower part 30 in the corresponding recess in the brew head.

The upper part of the brew head 51 of the beverage machine 50 is then closed in order to grip the device 1 in position. The compressive force applied to the device 1 ensures a fluid tight seal between the inlet/outlet member 32 and the fixed lower part of the brew chamber - this seal being improved by the presence of the annular peripheral ring 41 and, optionally, one or more compressible or resilient seals, such as O-rings. Consequently, the water inlet of the brew head is fluidly coupled to the inlet aperture 40 of the device 1.

The beverage machine 50 is then operated in the standard manner by pressing a start switch 54. This causes the barcode reader 53 of the beverage machine to be actuated to scan the barcode 19 through the window 38 of the lower part 30. The barcode 19 is configured to provide valid instructions to the microprocessor of the beverage machine to set the necessary dispensation parameters. In the case as illustrated where the device 1 is used for choosing a volume of heated water to be dispensed the primary parameter set by the barcode 19 is the volume of water dispensed. However, the barcode 19 may also set one or more further parameters of the dispensation cycle such as the flow rate and temperature of the water to be dispensed.

Following operation of the barcode reader of the beverage machine the beverage machine 50 operates in accordance with its programming to heat the water from its reservoir to the desired temperature by means of its heater and then to pump the heated water through the device 1 by pumping the water from the water inlet of the brew head into the lower part 30 through the inlet aperture 40, then via the flow passage 44 within the lower part 30 and finally down through the discharge spout 42 and out of the outlet aperture 43 into a receptacle positioned on a cup stand 55 of the beverage machine. The volume of water dispensed is determined by means of the flow meter and/or positive displacement pump of the beverage machine and dispensation ceases once the processor has determined that the volume of water dispensed meets the desired volume as set by the barcode 19.

Following the dispensation cycle of dispensing heated water, the device 1 may be left in the beverage machine in order to dispense a further quantity of heated water or may be removed so as to replace the inlet/outlet piercer unit of the beverage machine in order to dispense beverages using one or more pre-packaged beverage ingredients.

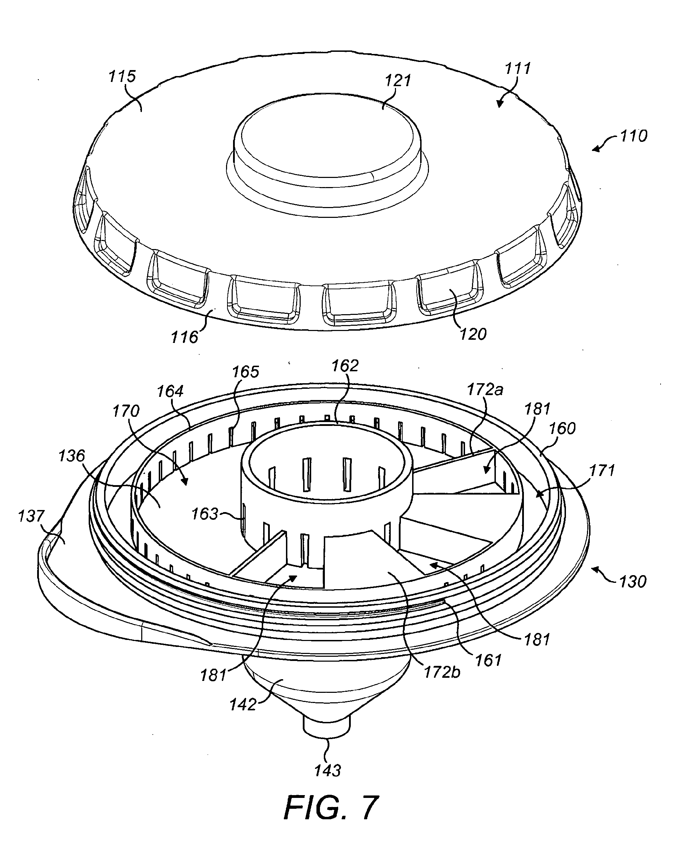

A second device 101 according to the present disclosure is shown in Figures 7 to 10 and comprises an upper part 110 and a lower part 130.

The upper part 110 forms a lid or cap of the device 101 and comprises an annular shell 111 having a centrally located raised cylindrical extension 121 which may be utilised as a handle for holding the upper part 110. The shell 111 is relatively thin and forms a generally disc-shaped configuration having a relatively flat body 115 and a dependant circumferential wall 116. An inner face of the wall 116 is provided with a screw thread formation (not shown in Figure 7) by which the upper part 110 can be screwed onto the lower part 130. An outer face of the wall 116 is provided with a series of indentations 120 which improve manual gripping and twisting of the upper part 110 when screwing and unscrewing the upper part 110.

The upper part 110 may be formed as a moulded component or otherwise thermoformed from polypropylene. Other engineering plastics may also be used.

The lower part 130 comprises a body 131 having an inlet aperture 140 and a discharge spout 142. The discharge spout 142 is generally frustoconical in shape and terminates at its lower end in an outlet aperture 143.

The body 131 comprises a generally planar plate 136 which is generally circular in shape except for a single lobe portion 137 which extends at one point around the circumference of the plate 136.

The body 131 also comprises a number of raised formations which extend upwardly from an upper face of the plate 136.

An outer wall 160 extends circumferentially around the body 131 and is located near a periphery of the plate 136. An outer face of the outer wall 160 is provided with a screw thread formation 161 that partners the screw thread formation of the wall 116 of the upper part 110 and facilitates attachment and detachment of the upper part 110 with the lower part 130. The outer wall 160 is solid without any through apertures therein.

An inner wall 162 extends circumferentially around the body 131 and located near a centre of the plate 136. The inner wall 162 is higher than the outer wall 160. The inner wall 162 is provided with a plurality of slots 163 that extend through the inner wall 162 to provide fluid communication across the inner wall 162 into the discharge spout 142.

An intermediate wall 164 extends circumferentially around the body 131 and is located between the outer wall 160 and the inner wall 162. The intermediate wall 164 is the same height as the outer wall 160. The intermediate wall 164 is provided with a plurality of slots 165 that extend through the intermediate wall 164 to provide fluid communication across the intermediate wall 164. The intermediate wall 164 demarcates a beverage ingredient zone 170 which lies inside the intermediate wall 164 from a manifold zone 171 which lies outside the intermediate wall 164.

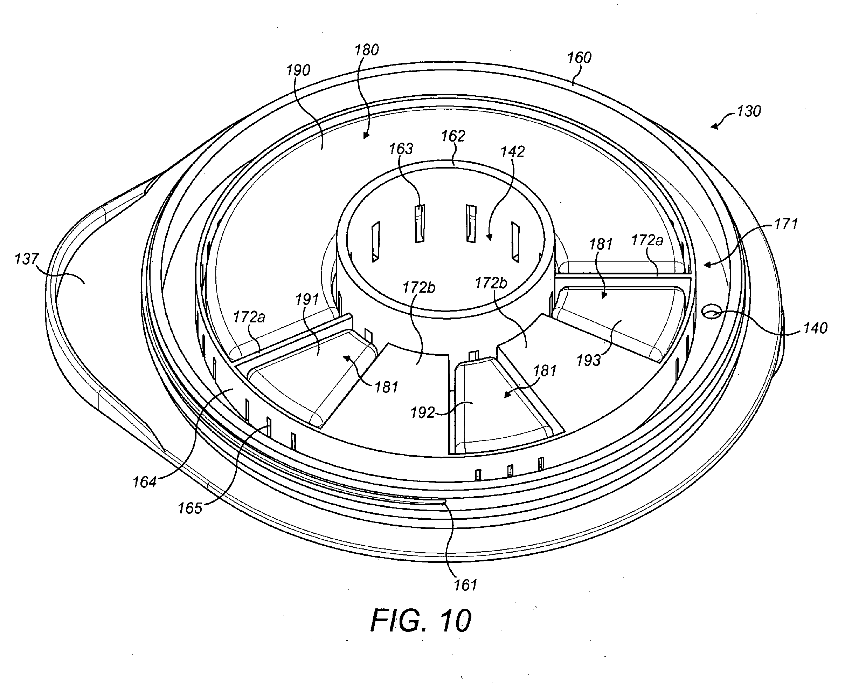

As most clearly shown in Figure 10, the inlet aperture 140 opens into the manifold zone 171 of the lower part 130.

The beverage ingredient zone 170 is separated into a plurality of chambers by radially extending walls. The walls may be thin walls 172a or in the form of thickened walls (or solid segments) 172b. Thus, in the illustrated example, there are formed a single main beverage ingredient chamber 180 and three ancillary beverage ingredient chambers 181.

The slots 165 of the intermediate wall 164 provide fluid communication from the manifold zone 171 into each of the chambers 180 and 181.

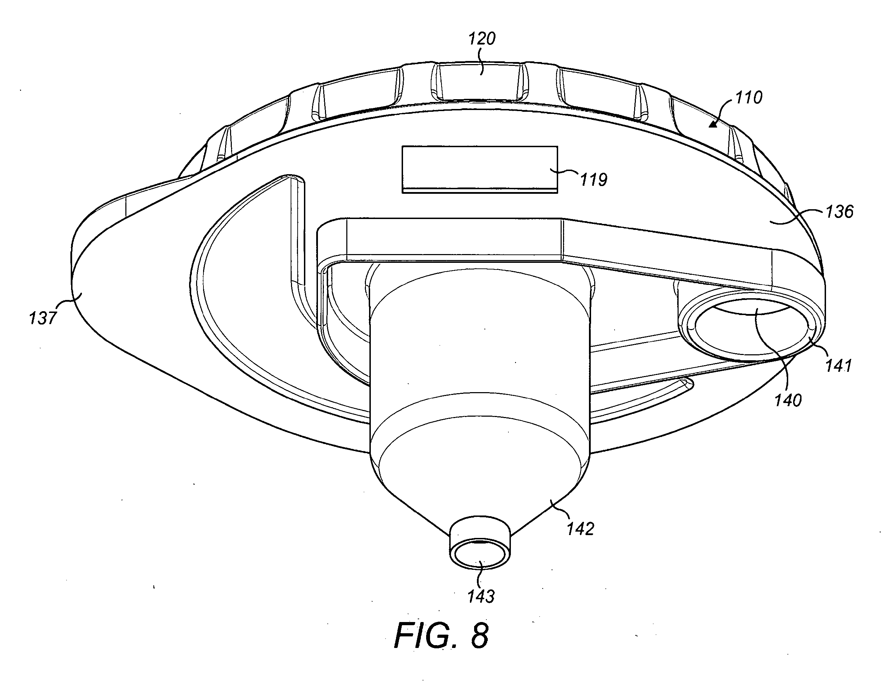

As most clearly shown in Figure 8, the inlet aperture 140 is formed as a hole in the plate 136 and opens into the manifold zone 170. The inlet aperture 140 is provided with an annular peripheral ring formation 141 which stands proud of the remainder of the surface of the plate 136.

One or more seal members such as rubberised or polymer O-ring gaskets may be provided around the inlet aperture 140.

The discharge spout 142 extends downwards away from the plate 136.

A barcode 119 is located on the underside of the plate 136, the use of which will be described below. The barcode 119 is encoded with data representative of one or more dispensation parameters, such as volume, temperature or flow rate. The barcode 119 may use a proprietary encoding symbology or a standardised symbology such as Universal Product Code (UPC) or European Article Number-13 (EAN-13).

The lower part 130 may be formed from moulded pieces of polypropylene. Other engineering plastics may also be used. The lower part may be formed as a single moulding or from multiple components which are assembled together.

The device 101 is assembled by screwing the upper part 110 or lid onto the lower part 130 by means of the screw thread formations on each part.

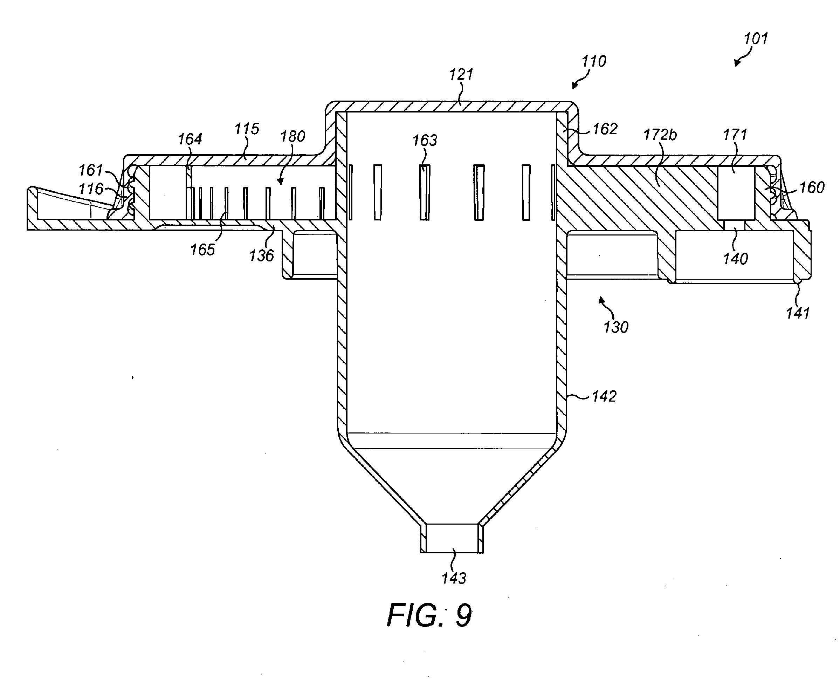

As best seen in Figure 9, the when the upper part 110 and the lower part 130 are fully screwed together the body 115 of the upper part 110 forms a fluid-tight sealing interface with the tops of the outer wall 160 and intermediate wall 164 as well as the walls 172a and 172b. Similarly the inner face of the cylindrical extension 121 forms a fluid-tight sealing interface with the top of the inner wall 162.

To use the device 101, a user first separates the upper part 110 from the lower part 130 by unscrewing the upper part or lid. Then one or more beverage ingredients are inserted into one or more of the beverage ingredient chambers 180 and 181 as most clearly shown in Figure 10. The main beverage ingredient chamber 180 is larger than the ancillary beverage ingredient chambers 181 and is intended to receive the beverage ingredient 190 that will be the main constituent of the beverage. The chamber 180 may receive two or more ingredients as a mixture or composition.

Examples of beverage ingredients which may be inserted into the main beverage ingredient chamber 180 include coffee, chocolate, milk, tea and fruit-flavoured drink mixes.

The ancillary beverage ingredient chambers 181 are smaller and intended for receiving secondary ingredients 191, 192, 193, such as flavourings, colourings, sweeteners, foaming agents, etc. For a particular beverage none, one or more of the ancillary beverage ingredient chambers 181 may receive ingredients. Each ancillary chamber 181 may receive two or more ingredients as a mixture or composition.

Examples of beverage ingredients which may be inserted into the ancillary beverage ingredient chambers 181 include coffee extracts, tea extracts, cocoa extracts, dairy-based ingredients including creamers, foaming agents, flavourings including orange, ginger, amaretto, mint, chocolate truffle, etc., and colourings.

The beverage ingredients in the chambers 180 and 181 may be in a dry form such as a roasted and ground ingredient or a soluble powder or an agglomeration. For example, the coffee ingredient may be roast and ground coffee or a freeze-dried or spray-dried soluble coffee. The dry ingredients may be loosely packed into the chambers 180 and 181 or may be in the form of compressed tablets.

The beverage ingredients in the chambers 180 and 181 may be in a liquid form such as a liquid dairy-based ingredient or a liquid tea or coffee extract.

The beverage ingredients, in particular when in liquid form, may be contained in a capsule or container shaped and sized to be received in the chambers 180 and 181 to retain the ingredient within its respective chamber until dispensation. The capsules may be formed from a watersoluble or heat-sensitive material which is designed to dissolve on contact with water and/or heated fluid to thereby release the ingredients. An example are polysaccharide films which are soluble in water.

The user then screws the upper part 110 and lower part 130 together to seal the beverage ingredients within the device 101.

The device 101 is designed to be used in combination with a beverage machine for dispensing heated water of the type as described above (including the content of EP1440639) with reference to the device 1 of Figures 1 to 5. The description of the beverage machine will not be repeated here. Instead the reader is directed to the description above.

In order to dispense a beverage from the device 101 in said beverage machine 50, as shown in Figure 6, the user first removes the replaceable inlet/outlet piercer unit 52 of the beverage machine 50 to expose the water inlet of the lower part of the brew head 51 and the brew head outlet. The user then inserts the device 101 into the brew head 51 of the beverage machine as shown in Figure 6 such that the inlet aperture 140 is aligned with the water inlet of the brew head and the discharge spout 142 extends downwardly through the outlet aperture of the brew head. In addition, the barcode 119 is aligned with the barcode scanner 53 of the brew head. Correct alignment of the device 1 is ensured by orientating the lobe 137 of the lower part 130 in the corresponding recess in the brew head.

The upper part of the brew head 51 of the beverage machine 50 is then closed in order to grip the device 101 in position. The compressive force applied to body 115 and/or raised extension 121 of the device 101 ensures a fluid tight seal between the lower part 130 and the fixed lower part of the brew chamber - this seal being improved by the presence of the annular peripheral ring 141 and, optionally, one or more compressible or resilient seals, such as O-rings. Consequently, the water inlet of the brew head is fluidly coupled to the inlet aperture 140 of the device 101.

The beverage machine 50 is then operated in the standard manner by pressing a start switch 54. This causes the barcode reader 53 of the beverage machine to be actuated to scan the barcode 119. The barcode 119 is configured to provide valid instructions to the microprocessor of the beverage machine to set the necessary dispensation parameters. These parameters can include the volume of water dispensed, the flow rate and the temperature of the water to be dispensed.

Following operation of the barcode reader of the beverage machine the beverage machine 50 operates in accordance with its programming to heat the water from its reservoir to the desired temperature (if heated water is desired) by means of its heater and then to pump the water through the device 101 by pumping the water from the water inlet of the brew head into the manifold zone 171 through the inlet aperture 140. The water is enabled to circulate in the manifold zone 171 and from there enter the beverage ingredient chambers 180 and 181 through the slots 165 in the intermediate wall 164. Once in the chambers 180 and 181 the water interacts with the beverage ingredients (after dissolving any ingredient wrapper, capsule, film, etc. where present) so that the beverage ingredients are brewed or dissolved to form a beverage fluid. The resultant beverage fluid exits into the top of the discharge spout 142 through the slots 163 in the inner wall 162. Once in the discharge spout the beverage fluid mixes and is dispensed out of the outlet aperture 143 into a receptacle positioned on a cup stand 55 of the beverage machine.

Following the dispensation cycle the device 101 may be removed and reused by refilling one or more of the beverage ingredient chambers 180 and 181 as desired.

Whilst the examples above has been described with reference to devices 1 and 101 with a discharge spout this is not essential. Instead, the devices may output water or other beverage into a discharge spout or channel of a beverage machine.

Whilst the examples above has been described with reference to a Tassimo® beverage machine, the devices 1 and 101 of the present disclosure may be configured to work with other beverage machines.

## Claims

1. A refillable device (1), suitable for use with a beverage machine, the device (1) comprising:
an inlet (40) for receiving, in use, water from a water supply of the beverage machine;
an outlet (43) through which fluid can be dispensed; and
a plurality of refillable beverage ingredient chambers (180, 181), **characterized in that**
the inlet (40) is located at or near a periphery of the device (1), the outlet (43) is located at or near a centre of the device (1) and the plurality of refillable beverage ingredient chambers (180, 181) are distributed circumferentially around the outlet (43).

2. A refillable device (1) as claimed in claim 1, wherein a plurality of fluid flow paths extend from the inlet (40) to the outlet (43) and the plurality of refillable beverage ingredient chambers (180, 181) are located such that a fluid flow path passes through each of the refillable beverage ingredient chambers (180, 181).

3. A refillable device as claimed in claims 1 or claim 2 wherein the upstream and downstream ends of each of the plurality of refillable beverage ingredient chambers (180, 181) are defined by a barrier (162, 164) with one or more apertures (163, 165)) therein.

4. A refillable device as claimed in any of claims 1 to 3 comprising a first part (10) and a second part (30) that can be separated from one another to allow filling of beverage ingredients into the plurality of refillable beverage ingredient chambers (180, 181) and subsequently coupled together.

5. A refillable device as claimed in any of claims 1 to 4 wherein the plurality of refillable beverage ingredient chambers (180, 181) comprises main beverage ingredient chamber (180) and a plurality of ancillary beverage ingredient chambers (181).

6. The combination of a refillable device as claimed in any of claims 1 to 5 and one or more portions of beverage ingredients.

7. The combination of claim 6 wherein the one or more portions of beverage ingredients are individually contained in a bag, wrapper, capsule, film or similar.

8. The combination of claim 7 wherein the bag, wrapper, capsule, film or similar is water soluble.

9. The combination of a refillable device as claimed in any of claims 1 to 5 and a beverage machine (50).

10. The combination of claim 9 wherein the outlet (43) of the device (1) defines a discharge outlet of the beverage machine (50).

11. The combination of claim 9 or claim 10 wherein the device (1) is interchangeable with a cartridge piercing unit (52) and/or a discharge spout of the beverage machine.

12. A method of dispensing a beverage from a beverage machine (50), comprising utilising a refillable device (1) as claimed in any of claims 1 to 5 ; the method comprising the steps of:
a) opening the device (1);
b) filling one or more of the plurality of refillable beverage ingredient chambers (180, 181) with one or more beverage ingredient portions;
c) closing the device (1);
d) inserting the device (1) in the beverage machine (50);
e) operating the beverage machine (50) to thereby dispense water via the plurality of refillable beverage ingredient chambers (180, 181) and out of the outlet of the device (1) into a receptacle.

## Patentansprüche

1. Nachfüllbare Vorrichtung (1), die zur Verwendung mit einem Getränkeautomaten geeignet ist, wobei die Vorrichtung (1) aufweist:
einen Einlass (40) zum Aufnehmen von Wasser aus einer Wasserzufuhr des Getränkeautomaten bei der Verwendung;
einen Auslass (43), durch den Fluid abgegeben werden kann; und
mehrere nachfüllbare Kammern (180, 181) für Getränkeinhaltsstoffe, **dadurch gekennzeichnet, dass** der Einlass (40) an dem oder in der Nähe eines Randbereichs der Vorrichtung (1) angeordnet ist, der Auslass (43) an dem oder in der Nähe eines Zentrums der Vorrichtung (1) angeordnet ist und die mehreren nachfüllbaren Kammern (180, 181) für Getränkeinhaltsstoffe in Umfangsrichtung um den Auslass (43) verteilt sind.

2. Nachfüllbare Vorrichtung (1) nach Anspruch 1, wobei sich von dem Einlass (40) mehrere Fluidströmungswege zu dem Auslass (43) erstecken und die mehreren nachfüllbaren Kammern (180, 181) für Getränkeinhaltsstoffe so angeordnet sind, dass durch jede der nachfüllbaren Kammern (180, 181) für Getränkeinhaltsstoffe ein Fluidströmungsweg führt.

3. Nachfüllbare Vorrichtung nach Anspruch 1 oder Anspruch 2, wobei die stromaufwärts und stromabwärts gelegenen Enden einer jeden der mehreren nachfüllbaren Kammern (180, 181) für Getränkeinhaltsstoffe durch eine Barriere (162, 164) begrenzt sind, in der eine oder mehrere Öffnungen (163, 165) ausgebildet sind.

4. Nachfüllbare Vorrichtung nach einem der Ansprüche 1 bis 3, die einen ersten Teil (10) und einen zweiten Tel (30) aufweist, die voneinander getrennt werden können, um ein Befüllen der mehreren nachfüllbaren Kammern (180, 181) für Getränkeinhaltsstoffe mit Getränkeinhaltsstoffen zu ermöglichen, und anschließend miteinander verbunden werden können.

5. Nachfüllbare Vorrichtung nach einem der Ansprüche 1 bis 4, wobei die mehreren nachfüllbaren Kammern (180, 181) für Getränkeinhaltsstoffe eine Hauptkammer (180) für Getränkeinhaltsstoffe und mehrere Nebenkammern (181) für Getränkeinhaltsstoffe umfassen.

6. Kombination aus einer nachfüllbaren Vorrichtung nach einem der Ansprüche 1 bis 5 und einer oder mehreren Portionen von Getränkeinhaltsstoffen.

7. Kombination nach Anspruch 6, wobei die eine oder die mehreren Portionen von Getränkeinhaltsstoffen einzeln in einem Beutel, einer Umhüllung, einer Kapsel, einer Folie oder ähnlichem enthalten sind.

8. Kombination nach Anspruch 7, wobei der Beutel, die Umhüllung, die Kapsel, die Folie oder ähnliches wasserlöslich sind.

9. Kombination aus einer nachfüllbaren Vorrichtung nach einem der Ansprüche 1 bis 5 und einem Getränkeautomaten (50).

10. Kombination nach Anspruch 9, wobei der Auslass (43) der Vorrichtung (1) eine Ausgabeöffnung des Getränkeautomaten (50) bildet.

11. Kombination nach Anspruch 9 oder Anspruch 10, wobei die Vorrichtung (1) mit einer Kartuschenstecheinheit (52) und/oder einem Ausgießer des Getränkeautomaten austauschbar ist.

12. Verfahren zum Ausgeben eines Getränks aus einem Getränkeautomaten (50), das eine Verwendung einer nachfüllbaren Vorrichtung (1) nach einem der Ansprüche 1 bis 5 umfasst, wobei das Verfahren Schritte umfasst zum:
a) Öffnen der Vorrichtung (1);
b) Befüllen von einer oder mehreren der mehreren nachfüllbaren Kammern (180, 181) für Getränkeinhaltsstoffe mit einer oder mehreren Portionen von Getränkeinhaltsstoffen;
c) Schließen der Vorrichtung (1);
d) Einsetzen der Vorrichtung (1) in den Getränkeautomaten (50);
e) Betreiben des Getränkeautomaten (50) so, dass Wasser durch die mehreren nachfüllbaren Kammern (180, 181) für Getränkeinhaltsstoffe und aus dem Auslass der Vorrichtung (1) in einen Behälter dosiert wird.

## Revendications

1. Dispositif rechargeable (1) qui convient pour l'utilisation avec une machine à boissons, le dispositif (1) comprenant :
une entrée (40) pour recevoir, en cours d'utilisation, de l'eau d'une alimentation en eau de la machine à boissons ;
une sortie (43) à travers laquelle le fluide peut être distribué ; et
une pluralité de chambres à ingrédients de boissons rechargeables (180, 181),
**caractérisé en ce que** l'entrée (40) se situe à ou près d'une périphérie du dispositif (1), la sortie (43) se situe à ou près d'un centre du dispositif (1), et la pluralité de chambres à ingrédients de boissons rechargeables (180, 181) sont distribuées circonférentiellement autour de la sortie (43).

2. Dispositif rechargeable (1) selon la revendication 1, dans lequel une pluralité de chemins d'écoulement de fluide s'étendent de l'entrée (40) à la sortie (43), et la pluralité de chambres à ingrédients de boissons rechargeables (180, 181) se situent de telle sorte qu'un chemin d'écoulement de fluide passe à travers chacune des chambres à ingrédients de boissons rechargeables (180, 181).

3. Dispositif rechargeable selon la revendication 1 ou la revendication 2, dans lequel les extrémités amont et aval de la pluralité de chambres à ingrédients de boissons rechargeables (180, 181) sont définies par une barrière (162, 164) avec une ou plusieurs ouvertures (163, 165) dans celle-ci.

4. Dispositif rechargeable selon l'une quelconque des revendications 1 à 3, comprenant une première partie (10) et une seconde partie (30) qui peuvent être séparées l'une de l'autre pour permettre le remplissage d'ingrédients de boisson dans la pluralité de chambres à ingrédients de boissons rechargeables (180, 181) et couplées ensuite ensemble.

5. Dispositif rechargeable selon l'une quelconque des revendications 1 à 4, dans lequel la pluralité de chambres à ingrédients de boissons rechargeables (180, 181) comprend une chambre à ingrédients de boissons principale (180) et une pluralité de chambres à ingrédients de boissons auxiliaires (181).

6. Combinaison d'un dispositif rechargeable selon l'une quelconque des revendications 1 à 5 et d'une ou plusieurs portions d'ingrédients de boissons.

7. Combinaison selon la revendication 6, dans laquelle une ou plusieurs portions précitées d'ingrédients de boissons sont individuellement renfermées dans un sac, un emballage, une capsule, un film ou similaire.

8. Combinaison selon la revendication 7, dans laquelle le sac, l'emballage, la capsule, le film ou similaire est soluble dans l'eau.

9. Combinaison d'un dispositif rechargeable selon l'une quelconque des revendications 1 à 5 et d'une machine à boissons (50).

10. Combinaison selon la revendication 9, dans laquelle la sortie (43) du dispositif (1) définit une sortie d'évacuation de la machine à boissons (50).

11. Combinaison de la revendication 9 ou de la revendication 10, dans laquelle le dispositif (1) est interchangeable avec une unité de percement de cartouche (52) et/ou un bec verseur de la machine à boissons.

12. Procédé de distribution d'une boisson d'une machine à boissons (50), comprenant l'utilisation d'un dispositif rechargeable (1) tel que revendiqué dans l'une quelconque des revendications 1 à 5 ; le procédé comprenant les étapes de :
a) ouvrir le dispositif (1) ;
b) remplir une ou plusieurs de la pluralité de chambres à ingrédients de boissons rechargeables (180, 181) avec une ou plusieurs portions d'ingrédients de boisson ;
c) fermer le dispositif (1) ;
d) insérer le dispositif (1) dans la machine à boissons (50) ;
e) faire fonctionner la machine à boissons (50) pour distribuer ainsi de l'eau par l'intermédiaire de la pluralité de chambres à ingrédients de boissons rechargeables (180, 181) et hors de la sortie du dispositif (1) dans un récipient.
